# EUROPÄISCHE PATENTSCHRIFT

(11) **EP 4 270 142 B1**
(45) Veröffentlichungstag und Bekanntmachung des Hinweises auf die Patenterteilung: **20.11.2024**
(21) Anmeldenummer: 22170638.5
(22) Anmeldetag: 28.04.2022
(51) Int. Cl.: G05D 16/10

(54) **DRUCKMINDERUNGSVENTIL, WASSERSTOFFTANK UND KRAFTFAHRZEUG**
PRESSURE REDUCING VALVE, HYDROGEN TANK AND MOTOR VEHICLE
SOUPAPE DE DIMINUTION DE PRESSION, RÉSERVOIR D'HYDROGÈNE ET VÉHICULE AUTOMOBILE

(43) Veröffentlichungstag der Anmeldung: 01.11.2023
(73) Patentinhaber: Robert Bosch GmbH, 70442 Stuttgart (DE)
(72) Erfinder: PICAUD, Jerome, 38230 Tignieu-Jameyzieu (FR); BLANC, Regis, 69160 Tassin La Demi Lune (FR); CHATELAIN, Sebastien, 93400 Saint-Ouen (FR); JULIEN, Jean-Roch, 69960 Corbas (FR); COMBE, Raphael, 93400 Saint-Ouen (FR); AMBLARD, Alain, 93400 Saint-Ouen (FR); BRUT, Romain, 69530 Orliénas (FR)

(56) Entgegenhaltungen:
- DE-A1- 102015 005 977
- US-A1- 2015 253 783
- US-A1- 2018 038 507

## Beschreibung

Die vorliegende Erfindung betrifft ein Druckminderungsventil zum Reduzieren eines Drucks eines Gases von einem ersten Druck auf einen zweiten Druck. Ferner betrifft die Erfindung einen Wasserstofftank mit einem gattungsgemäßen Druckminderungsventil sowie ein Kraftfahrzeug mit einem gattungsgemäßen Wasserstofftank.

### Stand der Technik

Es sind unterschiedliche Ausführungsformen von Druckminderungsventilen, wie beispielsweise von Wasserstoff Hochdruckminderungsventilen, bekannt, die zum Reduzieren eines relativ hohen, oftmals schwankenden Eingangsdrucks auf einen relativ niedrigen, konstanten Ausgangsdruck ausgebildet sind. Hierbei wird grundsätzlich zwischen zwei Bauarten unterschieden, konventionellen Druckminderungsventilen und invertierten Druckminderungsventilen.

Konventionelle Druckminderungsventile weisen eine erste Druckkammer mit einem ersten Gaseinlass und eine zweite Druckkammer mit einem Gasauslass auf. Über einen Gaskanal ist die erste Druckkammer mit der zweiten Druckkammer fluidkommunizierend gekoppelt. In dem Gaskanal ist ein Druckschaft eines federkraftbeaufschlagten Druckausgleichskolbens geführt. An einem in der ersten Druckkammer angeordneten Schaftende des Druckkolbenschafts ist eine Dichtungsvorrichtung angeordnet, mittels welcher ein Einlassquerschnitt des Gaskanals durch translatorisches Bewegen des Druckausgleichskolbens veränderbar bzw. verschließbar ist. Ein Druckstempelbereich des Druckausgleichskolbens ist in der zweiten Druckkammer angeordnet und gegen eine Wandung der zweiten Druckkammer umlaufend abgedichtet. Somit ist durch die Federspannung und die Druckverteilung auf die erste Druckkammer und die zweite Druckkammer ein Kräftegleichgewicht herstellbar im geöffneten Zustand. Ein Nachteil dieser Ausführung ist, dass die Dichtkraft im geschlossenen Zustand vom Druck in der ersten Kammer abhängig ist und somit die Belastung der Sitzdichtung bei hohem Systemdruck hoch ist, was zum Verschleiß über Lebensdauer führt.

Bei invertierten Druckminderungsventilen ist der Gaskanal im Druckkolben ausgebildet. Der Druckkolben ist derart in die erste Druckkammer translatorisch bewegbar, dass ein Kanaleinlass gegen eine an einem Bodenbereich der ersten Druckkammer angeordnete Dichtungsvorrichtung drückbar und somit verschließbar ist. Invertierte Druckminderungsventile haben den Nachteil, dass das Gas, im Fall einer Undichtigkeit an der Dichtvorrichtung zwischen Ventilkörper und Druckschaft, aus der ersten Druckkammer über eine Entlüftungsvorrichtung an eine Umgebung des Druckminderungsventils ausströmen kann.

US 2015/253783 A1 zeigt ein Druckminderungsventil nach dem Oberbegriff des Anspruchs 1.

### Offenbarung der Erfindung

Ein erster Aspekt der Erfindung betrifft ein Druckminderungsventil zum Reduzieren eines Drucks eines Gases von einem ersten Druck auf einen zweiten Druck mit den Merkmalen des unabhängigen Anspruchs 1. Ein zweiter Aspekt der Erfindung betrifft einen Wasserstofftank mit den Merkmalen des nebengeordneten Anspruchs 9. Ein dritter Aspekt der Erfindung betrifft ein Kraftfahrzeug mit den Merkmalen des nebengeordneten Anspruchs 10. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Druckminderungsventil beschrieben sind, selbstverständlich auch im Zusammenhang mit dem erfindungsgemäßen Wasserstofftank sowie dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß dem ersten Aspekt der Erfindung wird ein Druckminderungsventil zum Reduzieren eines Drucks eines Gases von einem ersten Druck auf einen zweiten Druck bereitgestellt. Das Druckminderungsventil weist einen Ventilkörper, in welchem eine erste Druckkammer mit einem Gaseinlass zum Einlassen des Gases unter dem ersten Druck und eine mit der ersten Druckkammer fluidkommunizierend gekoppelte zweite Druckkammer mit einem Gasauslass zum Auslassen des Gases unter dem zweiten Druck ausgebildet sind, auf. Ferner weist das Druckminderungsventil einen im Ventilkörper translatorisch bewegbar geführten Druckausgleichskolben mit einem in der zweiten Druckkammer angeordneten sowie umfänglich gegen eine Wandung der zweiten Druckkammer abgedichteten Druckstempel und einem am Druckstempel angeordneten, im Ventilkörper zwischen der ersten Druckkammer und der zweiten Druckkammer geführten Druckschaft auf. Im Inneren des Druckausgleichskolbens ist ein Gaskanal ausgebildet, wobei der Gaskanal auf einer dem Druckstempel abgewandten Seite des Druckschafts einen Kanaleinlass zum Einlassen des Gases aus der ersten Druckkammer und auf einer dem Druckschaft abgewandten Seite des Druckstempels einen Kanalauslass zum Auslassen des Gases in die zweite Druckkammer aufweist. Eine Stirnwandung des Kanaleinlasses ist durch die translatorische Bewegung des Druckkolbens gegen eine in der ersten Druckkammer angeordnete Dichtungsvorrichtung zum Abdichten des Kanaleinlasses in eine Verschlussstellung drückbar. Zudem weist das Druckminderungsventil eine Federvorrichtung zum Wegbewegen des Kanaleinlasses von der Dichtungsvorrichtung aus der Verschlussstellung in eine Öffnungsstellung auf. Erfindungsgemäß weist der Druckschaft in einem Bereich zwischen der zweiten Druckkammer und der zweiten Dichtungsvorrichtung eine dritte Dichtungsvorrichtung auf, welche zwischen dem Druckschaft und dem Ventilkörper angeordnet ist, wobei der Druckschaft zwischen der zweiten Dichtungsvorrichtung und der dritten Dichtungsvorrichtung einen Querkanal aufweist, wobei der Querkanal den Gaskanal mit einer Außenseite des Druckschafts fluidkommunizierend verbindet.

Unter einer Verschlussstellung wird im Rahmen der Erfindung eine Stellung des Druckausgleichskolbens verstanden, in welcher der Kanaleinlass des Gaskanals gegen die Dichtungsvorrichtung gedrückt und somit verschlossen ist.

Erfindungsgemäß kann der Druckausgleichskolben mehrere Verschlussstellungen aufweisen, bei welchen der Kanaleinlass jeweils mit einem unterschiedlich hohen Druck gegen die Dichtungsvorrichtung gedrückt ist. Die Dichtungsvorrichtung ist vorzugsweise elastisch ausgebildet und durch den Druckausgleichskolben reversibel deformierbar.

Unter einer Öffnungsstellung wird im Rahmen der Erfindung eine Stellung des Druckausgleichskolbens verstanden, in welcher zwischen dem Kanaleinlass und der Dichtungsvorrichtung ein Spalt ausgebildet ist, sodass Gas aus der ersten Druckkammer über den Gaskanal in die zweite Druckkammer strömen kann. Erfindungsgemäß kann der Druckausgleichskolben mehrere Öffnungsstellungen aufweisen, bei welchen der Spalt jeweils unterschiedlich groß ausgebildet ist. Der besseren Verständlichkeit halber wird im Rahmen der Erfindung lediglich eine Verschlussstellung und eine Öffnungsstellung näher beschrieben.

Über den ersten Gaseinlass ist das unter dem ersten Druck stehende Gas in die erste Druckkammer einleitbar. Der erste Gaseinlass ist vorzugsweise in einer Wandung des Ventilkörpers ausgebildet. Bei einem in der Öffnungsstellung angeordneten Druckausgleichskolben kann das Gas in den Kanaleinlass einströmen, durch den Gaskanal im Inneren des Druckausgleichskolbens weiterströmen und aus dem Kanalauslass in die zweite Druckkammer einströmen. Das Gas aus der zweiten Druckkammer weist den zweiten Druck auf und ist durch den zweiten Gasauslass aus der zweiten Druckkammer herausführbar. Ein steigender zweiter Druck bewirkt ein Bewegen des Druckausgleichskolbens in Richtung der Verschlussstellung, ein fallender zweiter Druck bewirkt ein Bewegen des Druckausgleichskolbens von der Verschlussstellung weg, sodass ein Einlassquerschnitt in Abhängigkeit vom Fluidmassenstrom angepasst wird um den zweiten Druck in beiden Fällen konstant bzw. zumindest nahezu konstant zu halten.

Der Druckschaft ist in einer sich zwischen der ersten Druckkammer und der zweiten Druckkammer erstreckenden Kolbenführung linear bewegbar geführt. Um ein seitliches Vorbeiströmen des Gases am Druckschaft aus der ersten Druckkammer in die Kolbenführung zu verhindern, weist das Druckminderungsventil die zweite Dichtungsvorrichtung auf, die vorzugsweise der ersten Druckkammer benachbart am Druckschaft angeordnet ist und diesen gegen den Ventilkörper abdichtet.

Ein wesentlicher Unterschied des erfindungsgemäßen Druckminderungsventils gegenüber herkömmlichen invertierten Druckminderungsventilen ist, dass der Druckschaft den Querkanal und in Längsrichtung des Druckschafts die dritte Dichtungsvorrichtung aufweist. Der Querkanal ist zwischen der zweiten Dichtungsvorrichtung und der dritten Dichtungsvorrichtung angeordnet und stellt eine fluidkommunizierende Kopplung zwischen dem Gaskanal und der Kolbenführung in einem Bereich zwischen der zweiten Dichtungsvorrichtung und der dritten Dichtungsvorrichtung her. Der Querkanal weist im Betrieb des Druckminderungsventils den zweiten Druck oder zumindest im Wesentlichen den zweiten Druck auf.

Bei einer Leckage der zweiten Dichtungsvorrichtung kann Gas aus der ersten Druckkammer in die Kolbenführung eindringen und über den Querkanal in den Gaskanal und über den Gaskanal weiter in die zweite Druckkammer strömen. Das Gas ist anschließend über den Gasauslass aus der zweiten Druckkammer herausleitbar. Wird kein Gas aus der zweiten Druckkammer abgelassen, ist die Leckage somit über einen marginalen Druckanstieg in der zweiten Druckkammer ermittelbar.

Ein erfindungsgemäßes Druckminderungsventil hat gegenüber herkömmlichen Druckminderungsventilen den Vorteil, dass mit einfachen Mitteln sowie auf eine kostengünstige Art und Weise ein Verlust von Gas reduziert ist. Während das Gas bei herkömmlichen Druckminderungsventilen im Falle einer Undichtigkeit der zweiten Dichtungsvorrichtung aus der ersten Druckkammer über die zweite Dichtungsvorrichtung entweichen und über eine Entlüftungsvorrichtung an eine Umgebung des Druckminderungsventils ausströmen kann, ist ein solcher Gasverlust und die damit verbundenen Sicherheitsrisiken bei einem erfindungsgemäßen Druckminderungsventil vermeidbar. Das über die zweite Dichtungsvorrichtung entweichende Gas ist über den Querkanal der zweiten Druckkammer zuführbar und bleibt somit im Druckminderungsventil erhalten.

Gemäß einer bevorzugten Weiterentwicklung der Erfindung kann bei einem Druckminderungsventil vorgesehen sein, dass in dem Ventilkörper zwischen der zweiten Dichtungsvorrichtung und der dritten Dichtungsvorrichtung eine dritte Druckkammer ausgebildet ist, die mit dem Querkanal fluidkommunizierend gekoppelt ist. Die dritte Druckkammer ist vorzugsweise als eine lokale Aufweitung der Kolbenführung ausgebildet. Vorzugsweise ist die dritte Druckkammer derart ausgebildet, dass der Querkanal direkt in die dritte Druckkammer mündet. Es kann erfindungsgemäß vorgesehen sein, dass sich die dritte Druckkammer bis zur zweiten Dichtungsvorrichtung hin erstreckt. Weiter bevorzugt erstreckt sich die dritte Druckkammer nicht bis zur dritten Dichtungsvorrichtung, sodass eine Belastung der dritten Dichtungsvorrichtung reduziert ist. Dies hat den Vorteil, dass mit einfachen Mitteln sowie auf eine kostengünstige Art und Weise eine Abfuhr des Gases aus der Kolbenführung verbessert und ein Entweichen des Gases an eine Umgebung des Druckminderungsventils weiter reduziert ist.

Weiter bevorzugt umgibt die dritte Druckkammer den Druckschaft vollumfänglich. Die dritte Druckkammer ist vorzugsweise torusförmig, hohlzylinderförmig, hohlkegelstumpfförmig oder dergleichen ausgebildet. Durch ein vollumfängliches Umgeben ist die Fluidkommunikation zwischen dem Querkanal und der dritten Druckkammer sichergestellt. Dies hat den Vorteil, dass mit einfachen Mitteln sowie auf eine kostengünstige Art und Weise die Abfuhr des Gases aus der Kolbenführung verbessert und das Entweichen des Gases an eine Umgebung des Druckminderungsventils weiter reduziert ist.

In einer besonders bevorzugten Ausgestaltung der Erfindung kann bei einem Druckminderungsventil vorgesehen sein, dass an dem Querkanal ein Rückschlagventil angeordnet ist, wobei das Rückschlagventil ausgebildet ist, ein Ausströmen von Gas aus dem Gaskanal in die Umgebung des Druckschafts zu verhindern. Im Betrieb des Druckminderungsventils, wenn der Druckausgleichskolben in der Öffnungsstellung angeordnet ist, kann Gas aus der ersten Druckkammer über den Kanaleinlass in den Gaskanal und über den Kanalauslass aus dem Gaskanal in die zweite Druckkammer einströmen. Bei einem starken Anstieg des ersten Drucks kann es vorkommen, dass der Druck innerhalb des Gaskanals deutlich über den zweiten Druck ansteigt. Das Rückschlagventil stellt sicher, dass kein Gas mit einem solchen höheren Druck durch den Querkanal in die Umgebung des Druckschafts zwischen der zweiten Dichtungsvorrichtung und der dritten Dichtungsvorrichtung gelangt. Dies hat den Vorteil, dass mit einfachen Mitteln sowie auf eine kostengünstige Art und Weise die Belastung der dritten Dichtungsvorrichtung sowie das Entweichen des Gases an eine Umgebung des Druckminderungsventils weiter reduziert ist.

Es ist erfindungsgemäß bevorzugt, dass das Druckminderungsventil ein mit der zweiten Druckkammer fluidkommunizierend gekoppeltes Überdruckventil aufweist, wobei das Überdruckventil ausgebildet ist, bei Überschreiten eines vordefinierten Drucks in der zweiten Druckkammer Gas aus der zweiten Druckkammer abzulassen. Das Überdruckventil ist vorzugsweise am Ventilkörper angeordnet. Alternativ kann das Überdruckventil auch im Bereich des Querkanals oder an einer etwaigen dritten Druckkammer an dem Ventilkörper angeordnet sein. Alternativ kann das Überdruckventil auch an einer Längsdurchgangsbohrung des Druckstempels angeordnet sein. Alternativ kann der Druckschaft in einem Bereich zwischen der dritten Dichtungsvorrichtung und dem Druckstempel eine Querbohrung aufweisen, über welche der Gaskanal mit der Kolbenführung fluidkommunizierend gekoppelt ist, wobei das Überdruckventil vorzugsweise in oder an der Querbohrung angeordnet ist. Zum Auffangen des über das Überdruckventil abgelassenen Gases ist vorzugsweise eine Auffangvorrichtung vorgesehen. Dies hat den Vorteil, dass mit einfachen Mitteln sowie auf eine kostengünstige Art und Weise ein übermäßiger Druckanstieg in der zweiten Druckkammer, beispielsweise bei einem Totalversagen der zweiten Dichtungsvorrichtung, vermeidbar sowie das Entweichen des Gases an eine Umgebung des Druckminderungsventils weiter reduziert ist.

Vorzugsweise weist die erste Dichtungsvorrichtung und/oder zweite Dichtungsvorrichtung und/oder dritte Dichtungsvorrichtung ein elastisch verformbares Material auf oder ist aus einem elastisch verformbaren Material gebildet. Dies hat den Vorteil, dass mit einfachen Mitteln sowie auf eine kostengünstige Art und Weise die Dichtigkeit des Druckminderungsventils weiter verbessert ist.

Besonders bevorzugt weist die erste Dichtungsvorrichtung und/oder zweite Dichtungsvorrichtung und/oder dritte Dichtungsvorrichtung Gummi, Polyimid oder Polyurethan auf oder ist aus Gummi, Polyimid oder Polyurethan gebildet. Erfindungsgemäß kann die erste Dichtungsvorrichtung und/oder zweite Dichtungsvorrichtung und/oder dritte Dichtungsvorrichtung auch andere ähnliche Werkstoffe aufweisen. Derartige Dichtungsvorrichtungen sind leicht herstellbar und weisen besonders gute Dichteigenschaften, insbesondere bei Drücken um die 800 bar, auf. Dies hat den Vorteil, dass mit einfachen Mitteln sowie auf eine kostengünstige Art und Weise die Dichtigkeit des Druckminderungsventils weiter verbessert ist.

Gemäß einer bevorzugten Ausführungsform der Erfindung weist der Druckkolben am Kanaleinlass einen Außendurchmesser von zwischen 6 mm und 10 mm auf. Demnach weist der Druckschaft vorzugsweise einen Außendurchmesser von zwischen 6 mm und 10 mm auf. Druckminderungsventile mit derartig ausgebildeten Druckkolben sind für Anwendungen in Kraftfahrzeugen besonders geeignet und weisen bei herkömmlichen Ausführungsformen eine besonders hohe Undichtigkeit auf. Dies hat den Vorteil, dass mit einfachen Mitteln sowie auf eine kostengünstige Art und Weise die Dichtigkeit des Druckminderungsventils weiter verbessert.

Gemäß dem zweiten Aspekt der Erfindung wird ein Wasserstofftank bereitgestellt. Der Wasserstofftank weist eine Tankwandung und einen von der Tankwandung fluiddicht begrenzten Tankinnenraum zur Aufnahme von Wasserstoff auf. Erfindungsgemäß ist der Tankinnenraum mit einem Druckminderungsventil nach einem der vorangegangenen Ansprüche fluidkommunizierend gekoppelt. Das Druckminderungsventil ist vorzugsweise an der Tankwandung gehalten. Vorzugsweise ist das Druckminderungsventil in einen Gasauslasskanal des Wasserstofftanks eingeschraubt oder über eine Gasleitung mit dem Tankinnenraum fluidkommunizierend gekoppelt. Das Druckminderungsventil ist vorzugsweise austauschbar an der Tankwandung gehalten.

Bei dem erfindungsgemäßen Wasserstofftank ergeben sich sämtliche Vorteile, die bereits zu einem Druckminderungsventil gemäß dem ersten Aspekt der Erfindung beschrieben worden sind. Demnach hat der erfindungsgemäße Wasserstofftank gegenüber herkömmlichen Wasserstofftanks den Vorteil, dass mit einfachen Mitteln sowie auf eine kostengünstige Art und Weise ein Verlust von Gas reduziert ist. Während das Gas bei herkömmlichen Wasserstofftanks im Falle einer Undichtigkeit der zweiten Dichtungsvorrichtung aus der der ersten Druckkammer über die zweite Dichtungsvorrichtung entweichen und über eine Entlüftungsvorrichtung an eine Umgebung des Wasserstofftanks ausströmen kann, ist ein solcher Gasverlust bei einem erfindungsgemäßen Wasserstofftank vermeidbar. Das über die zweite Dichtungsvorrichtung entweichende Gas ist über den Querkanal der zweiten Druckkammer zuführbar und bleibt somit erhalten. Der erfindungsgemäße Wasserstofftank ist zudem besonders wartungsarm und weist selbst bei einer starken Belastung eine besonders hohe Sicherheit, beispielsweise gegen Verpuffungen oder dergleichen, auf.

Gemäß dem dritten Aspekt der Erfindung wird ein Kraftfahrzeug bereitgestellt. Das Kraftfahrzeug weist ein Antriebssystem mit einer Brennstoffzelle und/oder einem Wasserstoffverbrennungsmotor auf. Erfindungsgemäß weist das Antriebssystem einen erfindungsgemäßen Wasserstofftank auf. Die Brennstoffzelle ist zum Umwandeln der chemischen Energie des Wasserstoffs in elektrische Energie ausgebildet. Bei Verwendung einer Brennstoffzelle weist das Antriebssystem vorzugsweise einen Elektromotor zum Antreiben des Kraftfahrzeugs auf. Der Wasserstoffverbrennungsmotor ist zum Umwandeln der chemischen Energie des Wasserstoffs in mechanische Energie ausgebildet. Hierfür ist der Wasserstoffverbrennungsmotor zum direkten Verbrennen des Wasserstoffs ausgebildet.

Bei dem erfindungsgemäßen Kraftfahrzeug ergeben sich sämtliche Vorteile, die bereits zu einem Druckminderungsventil gemäß dem ersten Aspekt der Erfindung sowie zu einem Wasserstofftank gemäß dem zweiten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise ein Verlust von Gas reduziert ist. Während das Gas bei herkömmlichen Kraftfahrzeugen im Falle einer Undichtigkeit der zweiten Dichtungsvorrichtung, aus der der ersten Druckkammer über die zweite Dichtungsvorrichtung entweichen und über eine Entlüftungsvorrichtung an eine Umgebung des Kraftfahrzeugs ausströmen kann, ist ein solcher Gasverlust bei einem erfindungsgemäßen Kraftfahrzeug vermeidbar. Das über die zweite Dichtungsvorrichtung entweichende Gas ist über den Querkanal der zweiten Druckkammer zuführbar und bleibt somit erhalten. Das erfindungsgemäße Kraftfahrzeug ist zudem besonders wartungsarm und weist selbst bei einer starken Belastung eine besonders hohe Sicherheit, beispielsweise gegen Verpuffungen oder dergleichen, auf.

Ein erfindungsgemäßes Druckminderungsventil, ein erfindungsgemäßer Wasserstofftank sowie ein erfindungsgemäßes Kraftfahrzeug werden nachfolgend anhand von Zeichnungen näher erläutert. Es zeigen jeweils schematisch:
- Figur 1: in einer Schnittdarstellung ein Druckminderungsventil gemäß dem Stand der Technik,
- Figur 2: in einer Schnittdarstellung ein Druckminderungsventil gemäß einer bevorzugten ersten Ausführungsform der Erfindung,
- Figur 3: in einer Schnittdarstellung eine Detailansicht des Druckminderungsventils aus Figur 2,
- Figur 4: in einer Schnittdarstellung ein Druckminderungsventil gemäß einer bevorzugten zweiten Ausführungsform der Erfindung,
- Figur 5: in einer Schnittdarstellung ein Druckkolben gemäß einer bevorzugten Ausführungsform der Erfindung,
- Figur 6: in einer Schnittdarstellung eine Detailansicht eines Ventilkörpers gemäß einer bevorzugten Ausführungsform der Erfindung,
- Figur 7: in einer Seitenansicht eine bevorzugte Ausführungsform eines erfindungsgemäßen Kraftfahrzeugs.

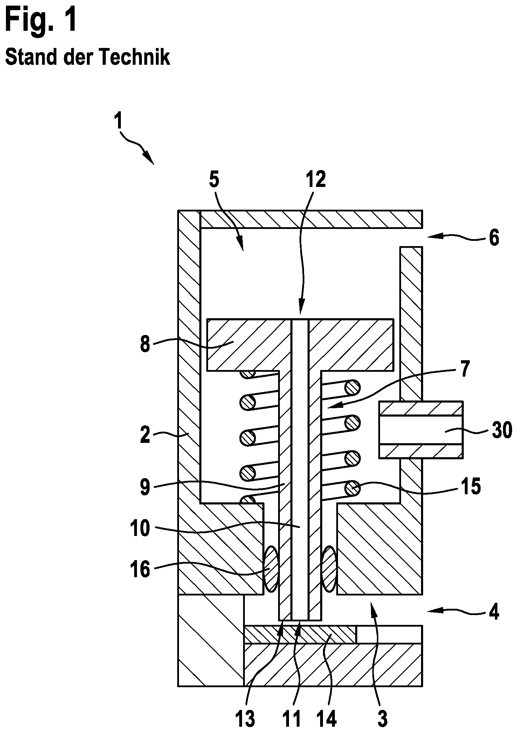

Elemente mit gleicher Funktion und Wirkungsweise sind in den Figuren 1 bis 7 jeweils mit denselben Bezugszeichen versehen.

In Fig. 1 ist ein Druckminderungsventil 1 gemäß dem Stand der Technik schematisch in einer Schnittdarstellung abgebildet. Das Druckminderungsventil 1 weist einen Ventilkörper 2 auf, durch welchen eine erste Druckkammer 3 und eine zweite Druckkammer 5 gebildet sind. Über einen Gaseinlass 4 ist Gas in die erste Druckkammer 3 einleitbar. Die erste Druckkammer 3 ist mit der zweiten Druckkammer 5 fluidkommunizierend gekoppelt. Über einen Gasauslass 6 ist das Gas aus der zweiten Druckkammer 5 auslassbar.

Im Ventilkörper 2 ist ein Druckausgleichskolben 7 linear bewegbar angeordnet. Ein Druckstempel 8 des Druckausgleichskolbens 7 ist in der zweiten Druckkammer 5 angeordnet. Ein Druckschaft 9 des Druckausgleichskolbens 7 erstreckt sich vom Druckstempel 8 in die erste Druckkammer 3. Durch den Druckausgleichskolben 7 erstreckt sich ein Gaskanal 10, welcher an einer in der ersten Druckkammer 3 angeordneten Stirnwandung 13 des Druckschafts 9 einen Kanaleinlass 11 und auf einer dem Druckschaft 9 abgewandten Seite des Druckstempels 8 einen Kanalauslass 12 aufweist. Der Druckschaft 9 ist umfänglich gegen den Ventilkörper 2 abgedichtet.

Der Druckausgleichskolben 7 ist über eine Federvorrichtung 15 in die dargestellte Öffnungsstellung bewegbar. Durch ansteigenden Druck in der zweiten Druckkammer 5 ist der Druckausgleichskolben 7 derart in Richtung einer in der ersten Druckkammer 3 angeordneten Dichtungsvorrichtung 14 bewegbar, dass die Stirnwandung 13 flächig gegen die Dichtungsvorrichtung 14 drückt und somit der Kanaleinlass 11 verschlossen ist. Diese Position wird im Rahmen der Erfindung als Verschlussposition bezeichnet.

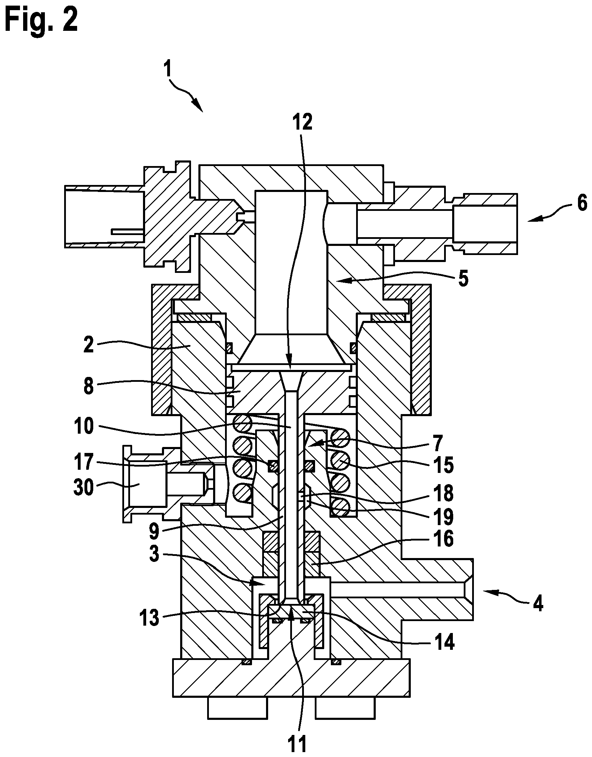

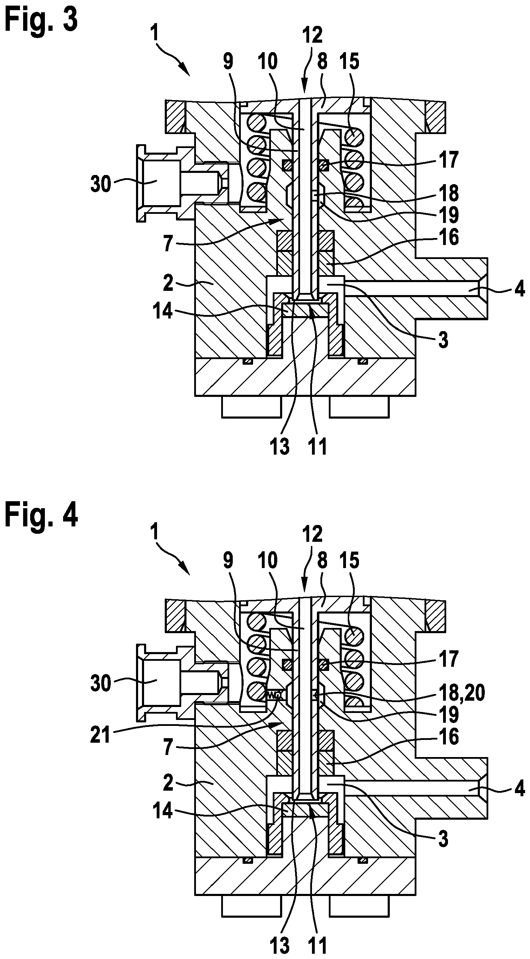

Fig. 2 zeigt ein Druckminderungsventil 1 gemäß einer bevorzugten ersten Ausführungsform der Erfindung schematisch in einer Schnittdarstellung. In Fig. 3 ist eine Detailansicht des Druckminderungsventils 1 aus Fig. 2 schematisch in einer Schnittdarstellung dargestellt. Das Druckminderungsventil 1 ist in der Öffnungsstellung angeordnet. Das Druckminderungsventil 1 gemäß der bevorzugten ersten Ausführungsform der Erfindung unterscheidet sich von dem in Fig. 1 dargestellten Druckminderungsventil 1 insbesondere in einer dritten Dichtungsvorrichtung 17, die am Druckschaft 9 zwischen dem Druckstempel 8 und der zweiten Dichtungsvorrichtung 16 angeordnet ist und den Druckschaft 9 gegen den Ventilkörper 2 abdichtet. Ferner weist der Druckschaft 9 zwischen der zweiten Dichtungsvorrichtung 16 und der dritten Dichtungsvorrichtung 17 einen Querkanal 18 auf, über welchen eine im Ventilkörper 2 ausgebildete dritte Druckkammer 19 mit dem Gaskanal 10 fluidkommunizierend gekoppelt ist. Bei einer Leckage der zweiten Dichtungsvorrichtung 16 kann Gas aus der ersten Druckkammer 3 über die dritte Druckkammer 19 und den Querkanal 18 in den Gaskanal 10 einströmen und bleibt somit im System erhalten.

Fig. 4 zeigt ein Druckminderungsventil 1 gemäß einer bevorzugten zweiten Ausführungsform der Erfindung schematisch in einer Schnittdarstellung. Das Druckminderungsventil 1 ist in der Öffnungsstellung angeordnet. Das Druckminderungsventil 1 gemäß der bevorzugten zweiten Ausführungsform der Erfindung unterscheidet sich von dem in Fig. 2 dargestellten Druckminderungsventil 1 gemäß der bevorzugten ersten Ausführungsform der Erfindung in einem Rückschlagventil 20, welches im Querkanal 18 angeordnet ist und ein Ausströmen des Gases aus dem Gaskanal 10 in die dritte Druckkammer 19 verhindert. Überdies ist im Ventilkörper 2 ein Druckbegrenzungsventil 21 angeordnet, welches ausgebildet ist, bei Übersteigen eines vordefinierten Drucks in der dritten Druckkammer 19 Gas aus der dritten Druckkammer 19 an eine Entlüftung 30 des Druckminderungsventils 1 abzulassen.

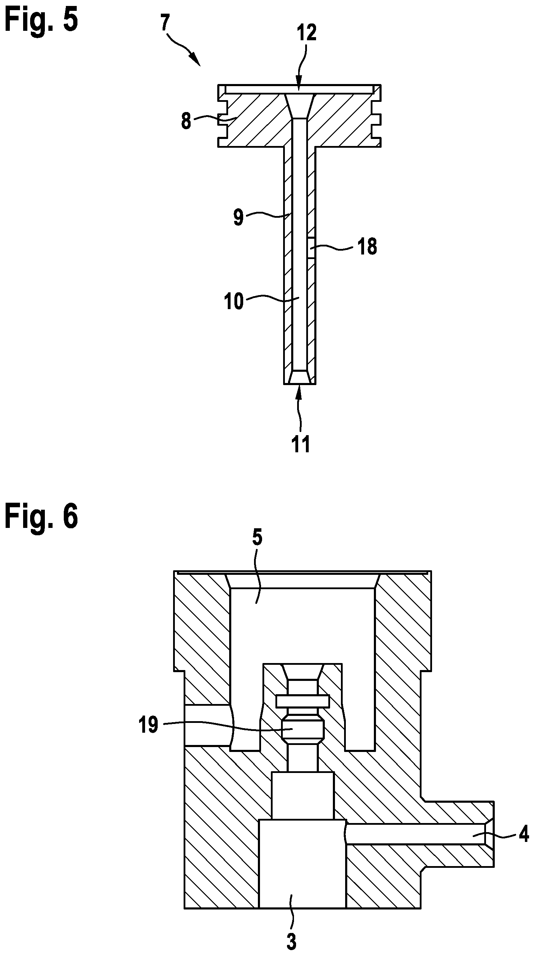

In Fig. 5 ist ein Druckkolben 7 gemäß einer bevorzugten Ausführungsform der Erfindung schematisch in einer Schnittdarstellung abgebildet. Der Druckkolben 7 weist den Druckstempel 8 und den sich vom Druckstempel 8 weg erstreckenden Druckschaft 9 auf. Durch den Druckstempel 8 und den Druckschaft 9 erstreckt sich der Gaskanal 10 mit dem Kanaleinlass 11 im Druckschaft 9 und dem Kanalauslass 12 im Druckstempel 8. In einem zentralen Bereich des Druckschafts 9 erstreckt sich in radialer Richtung der Querkanal 18 vom Gaskanal 10 zu einer Außenseite des Druckschafts 9.

Fig. 6 zeigt eine Detailansicht eines Ventilkörpers 2 gemäß einer bevorzugten Ausführungsform der Erfindung schematisch in einer Schnittdarstellung. In dieser Ansicht sind die erste Druckkammer 3 mit dem Gaseinlass 4, die zweite Druckkammer 5 und die zwischen der ersten Druckkammer 3 und der zweiten Druckkammer 5 angeordnete dritte Druckkammer 19 gut erkennbar.

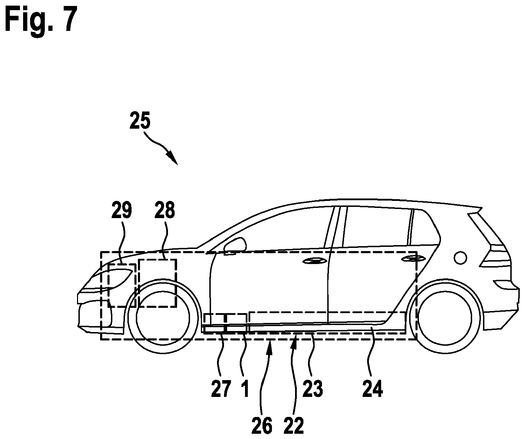

In Fig. 7 ist eine bevorzugte Ausführungsform eines erfindungsgemäßen Kraftfahrzeugs 25 schematisch in einer Seitenansicht dargestellt. Das Kraftfahrzeug 25 weist ein Antriebssystem 26 mit einem Elektromotor 28 und einem Getriebe 29 zum Antreiben des Kraftfahrzeugs 25 auf. Zum Umwandeln chemischer Energie aus Wasserstoff weist das Kraftfahrzeug 25 eine Brennstoffzelle 27 auf. Ferner weist das Antriebssystem 26 einen erfindungsgemäßen Wasserstofftank 22 mit einer Tankwandung 23 und einem durch die Tankwandung 23 abgedichteten Tankinnenraum 24 auf. Die Brennstoffzelle 27 ist über ein erfindungsgemäßes Druckminderungsventil 1 des Wasserstofftanks 22 mit dem Tankinnenraum 24 fluidkommunizierend gekoppelt.

## Patentansprüche

1. Druckminderungsventil (1) zum Reduzieren eines Drucks eines Gases von einem ersten Druck auf einen zweiten Druck, aufweisend einen Ventilkörper (2), in welchem eine erste Druckkammer (3) mit einem Gaseinlass (4) zum Einlassen des Gases unter dem ersten Druck und eine mit der ersten Druckkammer (3) fluidkommunizierend gekoppelte zweite Druckkammer (5) mit einem Gasauslass (6) zum Auslassen des Gases unter dem zweiten Druck ausgebildet sind, sowie einen im Ventilkörper (2) translatorisch bewegbar geführten Druckausgleichskolben (7) mit einem in der zweiten Druckkammer (5) angeordneten sowie umfänglich gegen eine Wandung der zweiten Druckkammer (5) abgedichteten Druckstempel (8) und einem am Druckstempel (8) angeordneten, im Ventilkörper (2) zwischen der ersten Druckkammer (3) und der zweiten Druckkammer (5) geführten Druckschaft (9), wobei im Inneren des Druckausgleichskolbens (7) ein Gaskanal (10) ausgebildet ist, wobei der Gaskanal (10) auf einer dem Druckstempel (8) abgewandten Seite des Druckschafts (9) einen Kanaleinlass (11) zum Einlassen des Gases aus der ersten Druckkammer (3) und auf einer dem Druckschaft (9) abgewandten Seite des Druckstempels (8) einen Kanalauslass (12) zum Auslassen des Gases in die zweite Druckkammer (5) aufweist, wobei eine Stirnwandung (13) des Kanaleinlasses (11) durch die translatorische Bewegung des Druckausgleichskolbens (7) gegen eine in der ersten Druckkammer (3) angeordnete erste Dichtungsvorrichtung (14) zum Abdichten des Kanaleinlasses (11) in eine Verschlussstellung drückbar ist, wobei das Druckminderungsventil (1) eine Federvorrichtung (15) zum Wegbewegen des Kanaleinlasses (11) von der ersten Dichtungsvorrichtung (14) aus der Verschlussstellung in eine Öffnungsstellung aufweist, und wobei zwischen dem Druckschaft (9) und dem Ventilkörper (2) eine zweite Dichtungsvorrichtung (16) angeordnet ist,
**dadurch gekennzeichnet,**
**dass** in einem Bereich zwischen der zweiten Druckkammer (5) und der zweiten Dichtungsvorrichtung (16) eine dritte Dichtungsvorrichtung (17) zwischen dem Druckschaft (9) und dem Ventilkörper (2) angeordnet ist, wobei der Druckschaft (9) zwischen der zweiten Dichtungsvorrichtung (16) und der dritten Dichtungsvorrichtung (17) einen Querkanal (18) aufweist, wobei der Querkanal (18) den Gaskanal (10) mit einer Außenseite des Druckschafts (9) fluidkommunizierend verbindet.

2. Druckminderungsventil (1) nach Anspruch 1,
**dadurch gekennzeichnet,**
**dass** in dem Ventilkörper (2) zwischen der zweiten Dichtungsvorrichtung (16) und der dritten Dichtungsvorrichtung (17) eine dritte Druckkammer (19) ausgebildet ist, die mit dem Querkanal (18) fluidkommunizierend gekoppelt ist.

3. Druckminderungsventil (1) nach Anspruch 2
**dadurch gekennzeichnet,**
**dass** die dritte Druckkammer (19) den Druckschaft (9) vollumfänglich umgibt.

4. Druckminderungsventil (1) nach einem der vorangegangenen Ansprüche,
**dadurch gekennzeichnet,**
**dass** an dem Querkanal (18) ein Rückschlagventil (20) angeordnet ist, wobei das Rückschlagventil (20) ausgebildet ist, ein Ausströmen von Gas aus dem Gaskanal (10) in die Umgebung des Druckschafts (9) zu verhindern.

5. Druckminderungsventil (1) nach einem der vorangegangenen Ansprüche,
**dadurch gekennzeichnet,**
**dass** das Druckminderungsventil (1) ein mit der zweiten Druckkammer (5) fluidkommunizierend gekoppeltes Überdruckventil (21) aufweist, wobei das Überdruckventil (21) ausgebildet ist, bei Überschreiten eines vordefinierten Drucks in der zweiten Druckkammer (5) Gas aus der zweiten Druckkammer (5) abzulassen.

6. Druckminderungsventil (1) nach einem der vorangegangenen Ansprüche,
**dadurch gekennzeichnet,**
**dass** die erste Dichtungsvorrichtung (14) und/oder die zweite Dichtungsvorrichtung (16) und/oder die dritte Dichtungsvorrichtung (17) ein elastisch verformbares Material aufweist oder aus einem elastisch verformbaren Material gebildet ist.

7. Druckminderungsventil (1) nach Anspruch 6,
**dadurch gekennzeichnet,**
**dass** die erste Dichtungsvorrichtung (14) und/oder die zweite Dichtungsvorrichtung (16) und/oder die dritte Dichtungsvorrichtung (17) Gummi, Polyimid oder Polyurethan aufweist oder aus Gummi, Polyimid oder Polyurethan gebildet ist.

8. Druckminderungsventil (1) nach einem der vorangegangenen Ansprüche,
**dadurch gekennzeichnet,**
**dass** der Druckschaft (9) einen Außendurchmesser von zwischen 6 mm und 10 mm aufweist.

9. Wasserstofftank (22), aufweisend eine Tankwandung (23) und einen von der Tankwandung (23) fluiddicht begrenzten Tankinnenraum (24) zur Aufnahme von Wasserstoff,
**dadurch gekennzeichnet,**
**dass** der Tankinnenraum (24) mit einem Druckminderungsventil (1) nach einem der vorangegangenen Ansprüche fluidkommunizierend gekoppelt ist.

10. Kraftfahrzeug (25), aufweisend ein Antriebssystem (26) mit einer Brennstoffzelle (27) und/oder einem Wasserstoffverbrennungsmotor,
**dadurch gekennzeichnet,**
**dass** das Antriebssystem (26) einen Wasserstofftank (21) nach Anspruch 9 aufweist.

## Claims

1. Pressure reducing valve (1) for reducing a pressure of a gas from a first pressure to a second pressure, comprising a valve body (2), in which a first pressure chamber (3) with a gas inlet (4) for inlet of the gas at the first pressure and a second pressure chamber (5), coupled in a fluid-communicating manner to the first pressure chamber (3), with a gas outlet (6) for outlet of the gas at the second pressure are formed, and a pressure equalizing piston (7), guided such that it can be moved translationally in the valve body (2), with a pressure plunger (8), arranged in the second pressure chamber (5) and peripherally sealed against a wall of the second pressure chamber (5), and a pressure stem (9), arranged on the pressure plunger (8) and guided in the valve body (2) between the first pressure chamber (3) and the second pressure chamber (5), wherein a gas duct (10) is formed in the interior of the pressure equalizing piston (7), wherein the gas duct (10) has, on one side of the pressure stem (9) facing away from the pressure plunger (8), a duct inlet (11) for inlet of the gas from the first pressure chamber (3) and, on one side of the pressure plunger (8) facing away from the pressure stem (9), a duct outlet (12) for outlet of the gas into the second pressure chamber (5), wherein a front wall (13) of the duct inlet (11) can be pressed into a closed position by the translational movement of the pressure equalizing piston (7) against a first seal apparatus (14), arranged in the first pressure chamber (3), in order to seal the duct inlet (11), wherein the pressure reducing valve (1) comprises a spring apparatus (15) for moving the duct inlet (11) away from the first seal apparatus (14) from the closed position into an open position, and wherein a second seal apparatus (16) is arranged between the pressure stem (9) and the valve body (2),
**characterized**
**in that**, in a region between the second pressure chamber (5) and the second seal apparatus (16), a third seal apparatus (17) is arranged between the pressure stem (9) and the valve body (2), wherein the pressure stem (9) has, between the second seal apparatus (16) and the third seal apparatus (17), a transverse duct (18), wherein the transverse duct (18) connects the gas duct (10) to an outer side of the pressure stem (9) in a fluid-communicating manner.

2. Pressure reducing valve (1) according to Claim 1,
**characterized**
**in that** a third pressure chamber (19) is formed in the valve body (2) between the second seal apparatus (16) and the third seal apparatus (17), which third pressure chamber (19) is coupled in a fluid-communicating manner to the transverse channel (18).

3. Pressure reducing valve (1) according to Claim 2,
**characterized**
**in that** the third pressure chamber (19) completely surrounds the pressure stem (9).

4. Pressure reducing valve (1) according to one of the preceding claims,
**characterized**
**in that** a check valve (20) is arranged on the transverse duct (18), wherein the check valve (20) is designed to prevent an outflow of gas from the gas duct (10) into the surroundings of the pressure stem (9).

5. Pressure reducing valve (1) according to one of the preceding claims,
**characterized**
**in that** the pressure reducing valve (1) has a pressure relief valve (21) which is coupled to the second pressure chamber (5) in a fluid-communicating manner, wherein the pressure relief valve (21) is designed to discharge gas from the second pressure chamber (5) when a predefined pressure in the second pressure chamber (5) is exceeded.

6. Pressure reducing valve (1) according to one of the preceding claims,
**characterized**
**in that** the first seal apparatus (14) and/or the second seal apparatus (16) and/or the third seal apparatus (17) comprise/comprises an elastically deformable material or are/is formed from an elastically deformable material.

7. Pressure reducing valve (1) according to Claim 6,
**characterized**
**in that** the first seal apparatus (14) and/or the second seal apparatus (16) and/or the third seal apparatus (17) comprise/comprises rubber, polyimide or polyurethane or are/is formed from rubber, polyimide or polyurethane.

8. Pressure reducing valve (1) according to one of the preceding claims,
**characterized**
**in that** the pressure stem (9) has an external diameter of between 6 mm and 10 mm.

9. Hydrogen tank (22), comprising a tank wall (23) and a tank interior space (24), bounded in a fluid-tight manner by the tank wall (23), for receiving hydrogen,
**characterized**
**in that** the tank interior space (24) is coupled to a pressure reducing valve (1) according to one of the preceding claims in a fluid-communicating manner.

10. Motor vehicle (25), comprising a drive system (26) with a fuel cell (27) and/or a hydrogen combustion engine,
**characterized**
**in that** the drive system (26) comprises a hydrogen tank (21) according to Claim 9.

## Revendications

1. Soupape (1) de réduction de pression pour réduire la pression d'un gaz, d'une première pression à une deuxième pression, présentant un corps de soupape (2) dans lequel sont formées une première chambre de pression (3) ayant une entrée de gaz (4) pour l'admission du gaz sous la première pression et une deuxième chambre de pression (5) reliée en communication de fluide avec la première chambre de pression (3), ayant une sortie de gaz (6) pour l'évacuation du gaz sous la deuxième pression, ainsi qu'un piston (7) d'équilibrage de pression guidé de manière mobile en translation dans le corps de soupape (2), avec un poinçon de pression (8) agencé dans la deuxième chambre de pression (5) et étanchéifié sur sa périphérie contre une paroi de la deuxième chambre de pression (5), et une tige de pression (9) agencée sur le poinçon de pression (8) et guidée dans le corps de soupape (2) entre la première chambre de pression (3) et la deuxième chambre de pression (5), un canal de gaz (10) étant formé à l'intérieur du piston (7) d'équilibrage de pression, le canal de gaz (10) présentant, sur un côté de la tige de pression (9) opposé au poinçon de pression (8), une entrée de canal (11) pour l'admission du gaz provenant de la première chambre de pression (3) et, sur un côté du poinçon de pression (8) opposé à la tige de pression (9), une sortie de canal (12) pour l'évacuation du gaz dans la deuxième chambre de pression (5), une paroi frontale (13) de l'entrée de canal (11) étant apte à être pressée dans une position de fermeture par le mouvement de translation du piston (7) d'équilibrage de pression contre un premier dispositif d'étanchéité (14) agencé dans la première chambre de pression (3) pour rendre étanche l'entrée de canal (11), la soupape (1) de réduction de pression présentant un dispositif à ressort (15) pour éloigner l'entrée de canal (11) du premier dispositif d'étanchéité (14), de la position de fermeture à une position d'ouverture, et un deuxième dispositif d'étanchéité (16) étant agencé entre la tige de pression (9) et le corps de soupape (2),
**caractérisée**
**en ce que**, dans une zone située entre la deuxième chambre de pression (5) et le deuxième dispositif d'étanchéité (16), un troisième dispositif d'étanchéité (17) est agencé entre la tige de pression (9) et le corps de soupape (2), la tige de pression (9) présentant un canal transversal (18) entre le deuxième dispositif d'étanchéité (16) et le troisième dispositif d'étanchéité (17), le canal transversal (18) reliant le canal de gaz (10) à un côté extérieur de la tige de pression (9) en communication de fluide.

2. Soupape (1) de réduction de pression selon la revendication 1,
**caractérisée**
**en ce qu'**une troisième chambre de pression (19) est formée dans le corps de soupape (2) entre le deuxième dispositif d'étanchéité (16) et le troisième dispositif d'étanchéité (17), cette chambre étant reliée en communication de fluide avec le canal transversal (18).

3. Soupape (1) de réduction de pression selon la revendication 2,
**caractérisée**
**en ce que** la troisième chambre de pression (19) entoure entièrement la tige de pression (9).

4. Soupape (1) de réduction de pression selon l'une des revendications précédentes,
**caractérisée**
**en ce qu'**un clapet anti-retour (20) est agencé sur le canal transversal (18), le clapet anti-retour (20) étant conçu pour empêcher un écoulement de gaz hors du canal de gaz (10) dans l'environnement de la tige de pression (9).

5. Soupape (1) de réduction de pression selon l'une des revendications précédentes,
**caractérisée**
**en ce que** la soupape (1) de réduction de pression comporte une soupape de surpression (21) reliée en communication de fluide avec la deuxième chambre de pression (5), la soupape de surpression (21) étant configurée pour évacuer le gaz de la deuxième chambre de pression (5) en cas de dépassement d'une pression prédéfinie dans la deuxième chambre de pression (5).

6. Soupape (1) de réduction de pression selon l'une des revendications précédentes,
**caractérisée**
**en ce que** le premier dispositif d'étanchéité (14) et/ou le deuxième dispositif d'étanchéité (16) et/ou le troisième dispositif d'étanchéité (17) comprend un matériau élastiquement déformable ou est formé d'un matériau élastiquement déformable.

7. Soupape (1) de réduction de pression selon la revendication 6,
**caractérisée**
**en ce que** le premier dispositif d'étanchéité (14) et/ou le deuxième dispositif d'étanchéité (16) et/ou le troisième dispositif d'étanchéité (17) comprend du caoutchouc, du polyimide ou du polyuréthane ou est formé de caoutchouc, de polyimide ou de polyuréthane.

8. Soupape (1) de réduction de pression selon l'une des revendications précédentes,
**caractérisée**
**en ce que** la tige de pression (9) présente un diamètre extérieur compris entre 6 mm et 10 mm.

9. Réservoir à hydrogène (22), présentant une paroi de réservoir (23) et un espace intérieur (24) de réservoir délimité de manière étanche aux fluides par la paroi de réservoir (23) pour recevoir de l'hydrogène,
**caractérisé**
**en ce que** l'espace intérieur (24) de réservoir est relié en communication de fluide avec une soupape (1) de réduction de pression selon l'une des revendications précédentes.

10. Véhicule automobile (25), présentant un système d'entraînement (26) avec une pile à combustible (27) et/ou un moteur à combustion interne à hydrogène,
**caractérisé**
**en ce que** le système de propulsion (26) comprend un réservoir à hydrogène (21) selon la revendication 9.
